# EUROPEAN PATENT SPECIFICATION

(11) **EP 3 789 969 B1**
(45) Date of publication and mention of the grant of the patent: **09.11.2022**
(21) Application number: 19195617.6
(22) Date of filing: 05.09.2019
(51) Int. Cl.: G07C 5/00, G07C 5/08, B60R 25/00, B60R 25/24

(54) **METHOD AND SYSTEM FOR VALIDATING AN IDENTITY OF A DESIGNATED FUNCTIONAL DEVICE**
VERFAHREN UND SYSTEM ZUR VALIDIERUNG EINER IDENTITÄT EINER BESTIMMTEN FUNKTIONALEN VORRICHTUNG
PROCÉDÉ ET SYSTÈME DE VALIDATION D'UNE IDENTITÉ D'UN DISPOSITIF FONCTIONNEL DÉSIGNÉ

(43) Date of publication of application: 10.03.2021
(73) Proprietor: Audi AG, 85045 Ingolstadt (DE)
(72) Inventor: Newman, John, 85049 Ingolstadt (DE)

(56) References cited:
- US-A1- 2005 248 444
- US-A1- 2008 051 955
- US-A1- 2008 103 640
- US-A1- 2011 187 513
- US-A1- 2018 082 500

## Description

The invention is concerned with a method for validating an identity of a designated functional device as well as a system comprising a functional device and a server unit, wherein the system is designed to conduct such a method.

Nowadays, obtaining vehicle data of a designated vehicle plays a critical role in a variety of economically important activities, e.g., vehicle valuation, vehicle fleet management, or diagnostics and repair action on a vehicle. In connection with such an activity, it is often the case that data related to the vehicle such as image, video, and/or sound data has to be collected by an respective external measurement device.

Document US 2007/0250232 A1 discloses an archiving system aimed at capture, organization and storage of data and digital images of a vehicle. Thereby, digital images are used to capture all desirable angles of the vehicle, wherein the images are taken by stationary mounted cameras. The goal hereby is to check if any damage was done to the vehicle in the meantime since the vehicle was dropped off or picked up.

Document US 9,916,705 B2 discloses a data aggregation application. This application includes that operational data and image data are captured from a client device and odometer readings are then extracted from the image data. Both the operational data and the image data can be verified by comparing an instrument panel depicted in the image data, e.g., a dash board to a known instrument panel depiction. The image data also captures some identifier that are fixed to a vehicle such as a vehicle identification number.

Document US 8,117,090 B2 discloses a method for a nationwide alliance of professional car care service providers for remarketing of privately owned motor vehicles. Hereby, a computer implemented system employs a method based on three-dimensional facial image technology in combination with personal relational identifier. The three-dimensional facial image captured from a consumer is analyzed to determine if said consumer has already registered with the computer implemented system under an alias name and/or a license number.

Document US 2005/0248444 A1 discloses an apparatus including a first device at a vehicle and capable of controlling a device of the vehicle. The first device transmits a first signal for controlling the device in response to a second signal transmitted from a second device located remote from the vehicle. The second device transmits the second signal in response to a third signal transmitted from a third device located remote from the vehicle and the second device.

Document US 2018/0082500 A1 discloses a vehicle accident reporting system that identifies an accident and then requests an image of a license plate of a vehicle that is involved in the identified accident and a video of the accident scene from a mobile device.

Documents US 2008/0103640 A1 and US 2011/0187513 A1 both disclose remote-control systems for causing a vehicle to perform a requested operation.

It is an object of the present invention, to provide a reliable solution to validate an identity of a functional device.

The object is accomplished by the subject matter of the independent claims. Advantageous developments with convenient and non-trivial further embodiments of the invention are specified in the following description, the dependent claims and the figures.

The invention is based on the idea that it is in many potential applications paramount to be sure of the authenticity of data associated with a functional device such as a vehicle. This is for example the case when a vehicle status is of interest for a potential buyer or seller of the vehicle. Unfortunately, it is difficult to guarantee the integrity of vehicle data today, as one cannot easily distinguish between data generated by a specific vehicle and artificial vehicle data. Artificial vehicle data is, for example, vehicle data that was created based on authentic vehicle data by manipulating the authentic vehicle data. In this context, such artificial, manipulated data can be referred to as spoofed data. This is for example the case if someone rents a vehicle and is afterwards asked to submit a photograph of the vehicle to proof that no damage was done to the rented vehicle. It is now possible to fake such a photograph as vehicle data because a photograph of a, for example, black vehicle associated with a particular vehicle identity number may or may not be a real photograph of the actual black vehicle that it is claimed to represent. Therefore, it is possible to falsely prove that a specific vehicle is undamaged by taking a photograph of another vehicle of a same vehicle model and submitting this photograph instead of an actual photograph of the vehicle in question to a server unit that requested proof of the undamaged status of the specific vehicle. If it is then based on the provided photograph determined that the rented vehicle is not damaged, a certificate is provided so that the renting agency owning the rented vehicle is falsely convinced that the vehicle in question is undamaged. In this case conformity of the designated vehicle that was rented and the vehicle used for proving the undamaged state of the designated vehicle is not given. In order to solve this problematic situation, a method should be available with which the identity of the designated vehicle is validated first before details on a current state of the designated vehicle are stored and provided for the renting agency, a potential buyer or seller of the designated vehicle, and/or a vehicle manufacturer. This could be achieved based on vehicle connectivity including making a subtle change to a specific vehicle for a specific time period so that data collected with respect to the vehicle can be authenticated by an off-vehicle server unit. More general, based on functional device connectivity including making a subtle change to a specific functional device for a specific time period so that data collected with respect to the functional device can be authenticated by an off-functional-device server unit could be a possibility to validate the identity of the designated functional device.

The inventive method is for validating an identity of a designated functional device and comprises as a first step transmitting a control command signal for at least one component of the designated functional device to the functional device vehicle. The control command signal is sent by an off-functional-device server unit. The functional device is, for example, a vehicle and/or an piece of industrial equipment such as a robot. In the following, the inventive method is exemplarily described for a vehicle as functional device. Preferably, the functional device is a vehicle. In this case, the control command signal is sent by an off-vehicle server unit. The off-vehicle server unit is, for example, designed as a computer such as a network host. The designated vehicle is a specific vehicle whose identity validation is of interest for someone, e.g., the renting agency, the potential buyer or seller of the designated vehicle, and/or the vehicle manufacturer. In the first step of the method, data is sent to the designated vehicle as functional device comprising details on how to operate at least one vehicle component of the vehicle. These details are passed on via the transmitted control command signal. The transmitted control command signal could, for example, comprise data specifying how to change a position of a driver seat of the designated vehicle, i.e., details on a specific movement of a seat backrest of the driver seat of the designated vehicle to reach a specific seat backrest angle relative to a seating surface of the driver seat of the vehicle. A situation in which this method could be applied is that for example a person stands in front of the vehicle that is allegedly the designated vehicle. This person now wonders if the vehicle in front of him or her is really the designated vehicle of which various details on, for example, a previous damage and/or a current state of the vehicle are known. Therefore, the person wishes to validate the identity of the vehicle in front of him or her as the designated vehicle. The described details could be stored as a detailed data record of the designated vehicle in the off-vehicle server unit and/or in an off-vehicle memory device that is separated from the off-vehicle server unit.

In a next step, after having received the transmitted control command signal, the at least one component of the designated vehicle as functional device is operated according to the transmitted control command signal. This step is performed by a control unit of the designated vehicle that is designed to operate the at least one vehicle component of the designated vehicle according to the transmitted control command signal. This means that, for example, the driver seat of the designated vehicle is moved according to the specifications given by the control command signal. This is done fully automatically meaning that the person standing in front of the vehicle is neither informed nor involved in operating the at least one vehicle component of the designated vehicle according to the transmitted control command signal. In order to make sure that the control command signal is only executable by the designated vehicle and not by any other vehicle that is for example positioned nearby the designated vehicle, the control command signal can be sent in an encrypted manner, wherein only the designated vehicle comprises a necessary decryption device and/or decryption information to decrypt the encrypted control command signal.

Afterwards or simultaneously, a request signal is transmitted by the off-functional-device server unit, e.g., the off-vehicle server unit to an off-functional-device device, e.g., an off-vehicle device. The off-vehicle device as off-functional-device device could be, for example, a mobile communication device of a person who has requested the validation of the identity of the vehicle positioned in front of him or her. With the request signal specific measurement data of a vehicle that is presumed to be the designated vehicle are requested. Note that two different terms are used to describe a vehicle in the context of the inventive method: the designated vehicle (true vehicle) and the presumed vehicle (a vehicle for which it is not clear yet whether it is the designated vehicle or not). The request signal can, for example, comprise the request to take and submit a photograph of the presumed vehicle with the mobile communication device of the person who stands in front of the presumed vehicle. In this example, the specific measurement data are the photograph data of the photograph of the vehicle taken by the mobile communication device of the person. The vehicle shown on the photograph is referred to as the presumed vehicle, meaning that this vehicle is so far only allegedly the designated vehicle.

In a further step of the method, the requested specific measurement data for the presumed functional device is received. The requested specific measurement data is hereby received by the off-functional-device server unit. The received specific measurement data is then evaluated by the server unit by applying a specific evaluation rule. This is done to determine if the at least one component of the presumed functional device, e. g., of the presumed vehicle was operated according to the transmitted control command signal. Within this evaluation step, it is therefore verified if the driver seat of the vehicle in front of the person has been moved according to the control command signal meaning that its seat backrest has been moved until a specific angle was enclosed between the seat backrest and the seating surface as prescribed by the control command signal. If this specific movement of the driver seat of the vehicle has been performed by the vehicle in front of the person, this is verified by evaluating the transmitted photograph data, i.e., the requested specific measurement data.

If this evaluation results in the observation that the at least one component of the presumed functional device was operated according to the transmitted control command signal, it is validated that the presumed functional device, i.e., the presumed vehicle is the designated functional device, i.e., the designated vehicle. This information is then stored for example in a memory unit of the server unit which performs both the steps of transmitting the control command signal for the at least one component to the designated functional device and receives afterwards the requested specific measurement data in order to do the evaluation step. If the received specific measurement data show and prove that the at least one component has been moved according to the control command signal, i.e., the requested movement of the driver seat of the presumed vehicle took place in the vehicle that is presumed to be the designated vehicle, this information is sufficient to state with certainty that the vehicle positioned in front of the person is in reality the designated vehicle for which, for example, the detailed data record is available and stored in the off-vehicle server unit.

It was thus shown that if the seller of a vehicle contacts for example the off-vehicle server unit to state that the seller who intends to sell the vehicle first wants an authentication of the to be sold vehicle the described method can be used to validate the identity of the vehicle as the designated vehicle that is supposed to be sold by the seller. The server unit then sends the control command signal that is preferably encrypted so that only the vehicle that is actually the designated vehicle, is capable of processing the received control command signal and operate the vehicle according to the control command signal. This means that if it is achieved that with help of the transmitted control command signal the vehicle behaves in a way that only the server unit can recognize and authenticate, the identity of this vehicle can be proven to be true. This is based on the fact that nobody else besides the off-vehicle server unit preferably knows any details on what the control command signal comprises, i.e., which operations of the at least one vehicle component of the designated vehicle are to be expected due to operating the vehicle according to the control command signal. According to the control command signal a seat of the vehicle might be adjusted to a certain angle and position, headlights might flash briefly in a very discreet pattern or a particular frequency might be played from a sound system of a vehicle. The resulting data is then collected by a third party, meaning the off-vehicle device, and are sent back to the server unit for authentication. Thereby it can be checked if the major signal, which if for example a photograph of the vehicle interior, contains evidence that the vehicle of which the photograph was sent in is actually the designated vehicle to which the control command signal was sent. It is therefore in the photograph checked if, for example, a left front seat has a very specific positioning that was prescribed by the control command signal. If the data can be collaborated by the server unit, the server unit can generate a certificate and make the certificate available to a designated recipient, for example the seller who was interested in validating the identity of the presumed vehicle as the designated vehicle. With help of this certificate the chance of fraud associated with wrongfully impersonated vehicle identities is significantly reduced.

The advantage of the described method is that it offers cross-validation of data of a designated vehicle. This can be used to support resale pricing as it can be guaranteed that a vehicle in question is actually the designated vehicle of which the detailed data record is available to prove, for example, an undamaged state of the particular designated vehicle. Therefore, it is possible to develop a vehicle curriculum vitae (CV). Also as it is widely known that a lot of fraud is performed associated with false reporting of a odometer reading value such a vehicle CV is advantageous to increase trust in provided vehicle data. By using cross-correlation, it is hence possible to build confidence in data reported by a vehicle because the identity of the vehicle in question as a specific designated vehicle can be performed easily. This means that applying the method described contributes to build trust in vehicle identity and also vehicle data associated with the designated vehicle as a reliable validation is available with which the identity of a vehicle can be reviewed.

In case of, for example, an industrially used robot as functional device, the control command signal could comprise details on a movement of a robot arm as component of the robot. The requested specific measurement data could then be a video feed of the moving robot arm. Finally, it could be validated, if a presumed robot is a designated robot.

In summary, the so far described method resembles a two-factor authentication, comprising that a first party claims to be itself, whereupon a signal is sent to a device that only the first party should be able to access by a second party, then the first party sends back a signal to validate itself to the second party. According to the inventive method, the presumed functional device as first party is expected to be the designated vehicle, whereupon the off-functional-device server unit as second party sends the control command signal to the designated vehicle. Then however, a third party is included which is the off-functional-device device. The third party is asked to provide the signal to validate the identity of the presumed functional device for the second party, i.e., the off-functional-device server unit. There is thus a significant difference between a typical two-factor authentication and the inventive method.

The invention also comprises embodiments that provide features which afford additional technical advantages.

In an embodiment of the method, it is provided that the transmitted request signal is transmitted to a mobile communication device. The transmitted request signal comprises request data to submit a static or moving picture of the presumed functional device as specific measurement data. This basically means that the request signal is transmitted to a mobile communication device, e.g., a smartphone of a person, wherein the request signal comprises instruction data for this person which comprise that the person is supposed to submit a photograph and/or a video feed of, for example, the presumed vehicle as specific measurement data. If, for example, a person is interested in having the identity of a vehicle in front of this person validated with the described method, this person can take part in the validation process by providing the needed specific measurement data that is needed to evaluate if the vehicle in front of the person is actually the designated vehicle. By transmitting the request signal to a mobile communication device the method can be applied at any place since no stationary sensor device is necessary to provide the specific measurement data for the presumed vehicle. This makes the method usable almost everywhere and also completely independent of further off-vehicle devices besides the server unit for transmitting the control command signal to the designated vehicle and evaluating the received specific measurement data and the mobile communication device.

According to another embodiment, the request signal is transmitted to a sensor device. The sensor device is an off-functional-device sensor device, for example, an off-vehicle camera device such as a traffic camera stationed besides or on a public road or a surveilling camera for a parking area. The request signal comprises control data for the sensor device so that the sensor device measures and submits the specific measurement data of the presumed functional device such as the presumed vehicle. For example, static or moving pictures taken by the traffic camera can be taken automatically and sent to the server unit for the following evaluation step. There is therefore no need for involvement of a person in order to provide the specific measurement data that are necessary to evaluate if the presumed vehicle is the designated vehicle. Since it is possible to rely completely on technical equipment, meaning the server unit as well as the off-vehicle sensor device, in order to perform the identity validation of the designated vehicle, the method is independent of manual input. This increases the amount of situations in which possible applications of the method are given, especially in an area with a well-developed traffic and surveillance camera infrastructure. It also reduces possible manipulation and impact of manual actions performed by the person who submits the manually taken measurement data resulting in increased reliability of the method.

Another embodiment discloses that the request signal is transmitted to a connector which is connected with a functional device diagnostics system such as a vehicle on-board diagnostics (OBD) system. An OBD system is a vehicle self-diagnostics and reporting system that is designed to give a vehicle owner or repair technician access to the status of various vehicle subsystems. It is often possible to access such an OBD system by connecting it or a respective vehicle part with a connector device. A connection between the connector device and a device requesting vehicle data provided by the OBD system can be established as a wireless or as a wired connection. One way to obtain vehicle data via a wired connection involves installing a so-called dongle solution as connector. This means that a physical device, which can be referred to as a dongle device, is plugged into an OBD port of the vehicle. Once the dongle device is plugged in, vehicle data provided by the OBD system of the vehicle can be downloaded and read. Alternatively, a wireless connection between, for example, a mobile communication device as device requesting vehicle data and the OBD system can be established via a Bluetooth connection and/or a wireless local network such as a wireless local area network (WLAN). It is also possible to build in a subscriber identity module (SIM) card into the dongle device itself in order to obtain vehicle data from the OBD system. The OBD system preferably offers a OBD2 port for data extraction.

The request signal comprises specification data characterizing functional device diagnostics data to retrieve from the functional device system, i.e., the vehicle OBD system as requested specific measurement data. As measurement data it is for example possible to send a voltage value that is measured on a wiring harness of the vehicle to the server unit. This voltage value could for example indicate if operation of an air conditioning system of a vehicle was performed according to the control command signal which for example comprises an activation of the air conditioning system of the designated vehicle for a specific period of time. This temporary activation is connected with a specific voltage signal in the specific period of time that is detected by the vehicle OBD system. It is thus possible to check if the at least one vehicle component of the designated vehicle was operated according to the transmitted control command signal or not by evaluating OBD system data as specific measurement data.

This increases further reliability of the result of the evaluation of the identity of the designated vehicle since the expected operation cannot easily be readjusted by the person. This is based on the thought that, for example, in case of a specific changing of the driver seat position there is still a slight chance that a person could reconstruct the expected final state of the vehicle and therefore take a photograph of a vehicle that is not the designated vehicle but make it convincingly look like the photograph was taken of the designated vehicle. Such a manipulation of the result of the described method is not possible if only vehicle diagnostics system data is used because these are even harder to manipulate than the above described typical operations of vehicle parts such as the driver seat. Therefore influencing the outcome of the validation process by this kind of requested specific measurement data is more difficult than in case of requested specific measurement data provided by the mobile communication device and/or the off-vehicle sensor device.

According to a particularly favorable embodiment, the request signal comprises indication data characterizing a time limit for submission of the specific measurement data. With the request signal, for example, the off-vehicle device is thus informed about how much time is given until the specific measurement data of a presumed vehicle is supposed to be sent to the server unit in order to be evaluated. It is therefore not possible to wait for example for several hours or even days between the transmittance of the control command signal to the designated vehicle and the submission of the requested specific measurement data of the presumed vehicle. The reason for this is that a significant time difference between these two steps of the method could result in corruption of the validating result. It would be for example possible for a person to observe what kind of changes are performed by the designated vehicle, for example this person could observe if and how the driver seat of that vehicle is changed according to the control command signal. The person could afterwards go to another vehicle and mimic the observed operation of the designated vehicle by changing the seat position manually according to what the person observed in the designated vehicle. If the person then had enough time to send in the measurement data which were for example taken as static pictures of the vehicle taken by the mobile communication device of the person, it is possible to falsely validate the presumed vehicle as the designated vehicle. The time limit is for example 1 minute, 2 minutes, 3 minutes, 4 minutes, 5 minutes, 10 minutes, 15 minutes, 30 minutes, 1 hour, 2 hours, and/or a day. If the time limit is not respected and specific measurement data is received too late, an additional request signal could be send to the off-vehicle device requesting another submission of specific measurement data of the vehicle that is presumed to be the designated vehicle. This increases reliability of the result of the validation of the identity of the designated vehicle.

Another preferable embodiment comprises that the control command signal comprises command data. The command data is characterizing multiple control commands for respective components of the designated functional device. This means that it is, for example, possible to have multiple operations of respective vehicle components of the designated vehicle. It is, for example, possible to request by the control command signal to operate the driver seat to a specific position specified by specific coordinates and additionally to move a chassis of the designated vehicle up to a specific ground clearance value. Such a combination of command data results in an increase in complexity of the control command signal contributing to further increasing confidence in the result of the described method.

In this context, it is also possible to additionally request position data provided by a satellite navigation system with global coverage, i.e., a global navigation satellite system (GNSS) such as the global positioning system (GPS). The GNSS position data of the vehicle can be provided by the OBD system. Based on the position data of the vehicle it can be researched, e.g., by the server unit what kind of weather conditions are expected at a location of the designated vehicle at a certain time. The information on the weather condition can be taken into account by evaluating the measurement data of the presumed vehicle. If the expected weather condition shows in the photograph of the presumed vehicle taken as specific measurement data, preferably additionally to the, for example, expected final driver seat position as result of the requested operation of the at least one vehicle component, validation of the presumed vehicle as the designated vehicle is accomplished. It is hence possible to include additional data provided by the off-vehicle server unit or another server unit into the evaluation process. Such additional data can be weather data, traffic data and/or infrastructure data such as detailed data on a parking area where the designated vehicle is currently parked according to its position data. The advantage of this is that multiple conditions that are independent of each other are formulated which all have to be met in order to validate the vehicle identity. Due to this high complexity the validation result is relatively immune to manipulations.

According to the inventive method, transmission of the control command signal is triggered by a validation request signal received from an off-functional-device communication device. This communication device is, for example, designed as an off-vehicle communication device, particularly as the mobile communication device and/or a server unit. If, for example, a person is interested in having identity validation done for a presumed vehicle, this person can contact a vehicle selling platform or another service platform that offers identity validation for vehicles and thereby trigger the respective validation request signal. This signal is then transmitted to the server unit where the control command signal for at least one vehicle component of the designated vehicle is created. The validation request signal can simply contain data indicating that the identity validation of the specific designated vehicle is demanded. This provides a pre-step that can take place before the above described steps of the method take place, i.e., before transmitting the control command signal to the designated vehicle. Preferably the validation request signal is sent from the mobile communication device of the person that later also receives the request signal upon which the person sends the requested specific measurement data from its mobile communication device to the server unit in order to evaluate the specific measurement data. It is therefore easy and comfortably executable within reach for a person to ask for validation of an identity of the designated vehicle.

Furthermore, an embodiment of the method comprises that according to the control command signal at least one of the following operations is executed in the designated functional device, particularly in the designated vehicle: movement of a seat to a specific final seat position, activation of a lighting equipment according to a specific light activation pattern, application of a specific voltage on a specific wiring harness and/or movement of a chassis to a position in which a specific ground clearance is given. Most of these operations are visible from an outside position of the functional device, i.e., the vehide. On the other hand, it is possible to make a subtle on a photograph or video feed invisible operation of the at least one vehicle component, as it is for example the case by applying a specific voltage on a specific wiring harness. This can for example be done by activating for a predefined period of time an electronic equipment within the vehicle such as an air conditioning system, a seat heating system or an audio system. Depending on what kind of vehicle control units are provided by the designated vehicle, one or more of the described operations can be performed based on the command data comprised by the control command signal. Out of the given variety of possible operations, one or more are picked meaning that it is difficult for a third party, e.g., the person with the mobile communication device to predict what kind of operation is to be performed once the control command signal was transmitted to the designated vehicle. This increases protection regarding possible manipulation of the specific measurement data.

Furthermore according to the inventive method, several control command signals are provided of which a current control command signal is chosen. This means that there is more than one control command signal that could possibly be sent to the designated vehicle and according to which the operation of the at least one vehicle component could take place. At a time always only one control command signal, the so called current control command signal, is transmitted to the designated vehicle. There can still be several command data characterizing multiple control commands for a respective vehicle component to be comprised by each of the multiple several control command signal. The current control command signal is chosen in specific time intervals and/or at a specific point in time. This means that each control command signal that is sent to the designated vehicle is always only temporarily valid. Because after a specific time interval, whereby the specific time interval is preferably shorter than the time limit for submission of the specific measurement data, another control command signal is chosen and transmitted in case another validation request concerning the designated vehicle is received. So it is possible that, for example, every day at a certain time the control command signal is changed to that each day another control command signal is sent to a designated vehicle once the method is activated.

This could mean that at a specific time according to the current control command signal, a seat position of the designated vehicle changes to a specific seat position while the provided position data as well as vehicle outdoor temperature sensor data received from the designated vehicle report that the vehicle was at the specific time stationary and exposed to sunlight of a specific intensity. Correspondingly as specific measurement data additionally to the position and temperature sensor data, a photograph of the presumed vehicle is received. The identity of the vehicle on the photograph is then authenticated by validating the seat position seen within the photograph as well as the surrounding weather conditions. This means that the photograph is accepted as proof for the identity of the presumed vehicle if it shows a stationary vehicle with the seat positioned at the specific final seat position as well as sunlight of approximately the specific expected intensity. However an hour later, the control command signal could be varied in a way that instead of the described moving of the driver seat a front passenger seat is supposed to be operated. Also the expected weather condition is adapted to the then expected weather condition at the position of the designated vehicle. These new conditions are then evaluated by applying the specific evaluation rule to the submitted photograph of the presumed vehicle. If however the new conditions are not met validation of the presumed vehicle was not successful.

This allows to easily determine if specific measurement data, like a photograph of the presumed vehicle, is transmitted too late after having been taken. This is possible because if, for example, the photograph was taken on a Monday after having received the request signal it cannot be used again as another measurement data for another request signal that is sent the day afterwards because then the operation of the vehicle according to the photograph would not match the expected operation due to the change of control command signal from Monday to Tuesday. It is alternatively possible to change the chosen control command signal every 5 minutes, 10 minutes, 15 minutes, 30 minutes, hour, 2 hours, 5 hours, day, 2 days, 3 days, 4 days, 5 days, 6 days, week, 2 weeks, month, and/or year depending on which specific kind of time interval is chosen. Alternatively or additionally it can also be established that the control command signal changes on every fifth of each months, i.e., at a specific point in time. By repeatedly changing the transmitted control command signal it is possible to increase further reliability of the results of the identity validation to further strengthen confidence in data authenticity.

Moreover, an embodiment of the inventive method comprises that the control command signal is transmitted as an encrypted file to the designated functional device. An encryption of the encrypted file is based on encryption data specific for the designated functional device. This means that, for example, only the designated vehicle beholds decryption data, e.g., on basis of the decryption device positioned in the designated vehicle, and is since able to decrypt the encrypted file of the control command signal. As a result only the designated vehicle is able to access the control command signal and operate the at least one vehicle component of the vehicle according to the transmitted control command signal. If a falsely reached vehicle receives the control command signal, this vehicle is not able to operate its at least one vehicle component according to the transmitted control command signal because due to the encryption that other vehicle cannot access the information and data stored within the control command signal. This makes it very reliable that only the designated vehicle is actually operated according to the transmitted control command signal.

In case according to the request signal data from the vehicle OBD system is transmitted, it is also possible to not only validate the presumed vehicle as the designated vehicle but also to validate in general data received as vehicle OBD data from the designated vehicle. This is for example possible if the control command signal comprises a momentarily known current measured at a specific sensor within the vehicle. After collecting the vehicle voltage data as specific measurement data and analysis of these data the validation result confirming that the presumed vehicle is the designated vehicle could also be used to validate that the vehicle data received from the OBD system of the presumed vehicle are in fact provided by the OBD system of the designated vehicle.

An unclaimed feature is a functional device, preferably a vehicle, with at least one control unit for operating at least one component of the functional device according to a control command signal. The functional device is designed to conduct corresponding steps for the functional device of a method as it was described above.

The invention also discloses a system comprising a functional device as described above as well as an off-functional-device server unit. The off-functional-device server unit is, for example, designed as a computer such as a network host. The system is designed to conduct a method as it was described above. The invention also comprises embodiments of the inventive system that comprise features that correspond to features as they have already been described in connection with the embodiments of the inventive method. For this reason, the corresponding features of the embodiments of the inventive system are not described here again.

In order to perform the inventive method, the invention also provides a processing unit for a server unit and/or a control unit for a functional device comprising at least one processor and a data memory coupled to the at least one processor, wherein the processing unit is designed to perform corresponding steps for the server unit and/or the control unit of an embodiment of the inventive method, respectively. The at least one processor may each be based on one of a microprocessor and a microcontroller and an ASIC (application specific integrated circuit). For performing the inventive method, the data memory may comprise computer readable instructions that -when executed by the at least one processor- cause the at least one processor to perform the embodiment of the inventive method. The processing unit may comprise one or more microprocessors and/or one or more microcontrollers. Further, the processing unit may comprise program code that is designed to perform the described method when executed by the processing unit. The program code may be stored in a data storage of the processing unit.

The invention also comprises the combinations of the features of the different embodiments.

In the following an exemplary implementation of the invention is described.

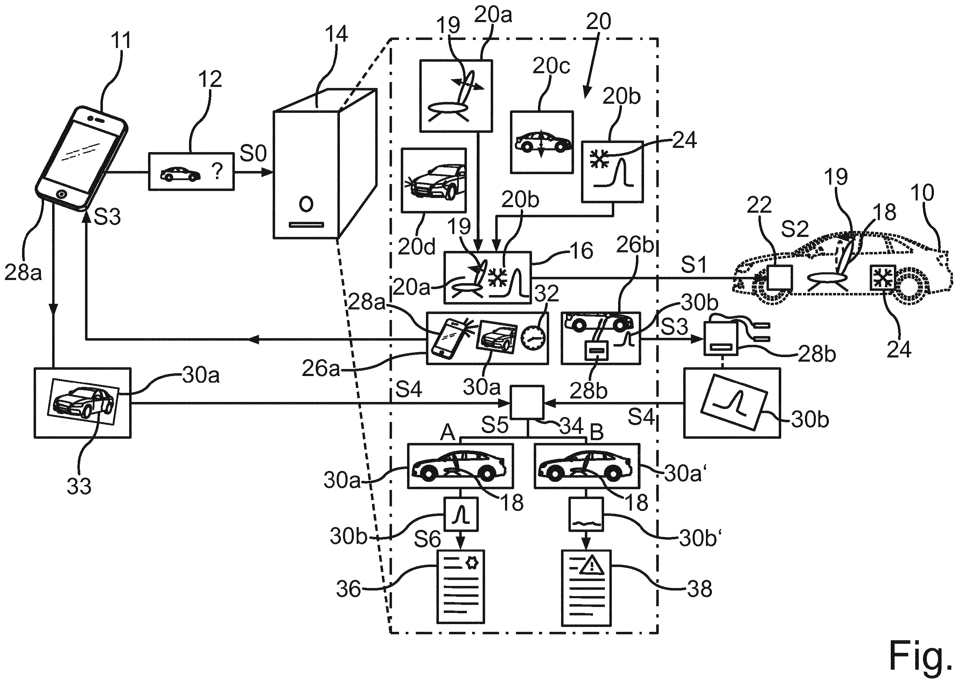

The only Fig. shows a schematic representation of a method for validating an identity of a designated vehicle.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the only Fig. the invention is sketched for a vehicle as functional device. Alternatively or additionally, a piece of industrial equipment such as a robot could replace the sketched vehicle as functional device.

With a mobile communication device 11, which is here sketched as a smartphone, a person can sent a validation request signal 12 to an off-vehicle server unit 14. Instead of being sent by the mobile communication device 11 the validation request signal 12 could be created by the server unit 14 directly. The validation request signal 12 can be prescribed by a user of the mobile communication device 11, for example, based on details regarding a requested validation given within a specific application on the mobile communication device 11. The requested validation could be a validation of an identity of a specific vehicle. Hereby, it is questionable if the specific vehicle is a designated vehicle 10 of which a detailed data report is stored in the server unit 14. Aim of the requested validation is hence the validation of the identity of the specific vehicle as the designated vehicle 10. The specific vehicle is hereby allegedly the designated vehicle 10 and in the following referred to as a presumed vehicle 33. The validation request signal 12 could also be sent via another server unit 14 of a vehicle selling platform and/or a manufacturer of the vehicle. Receiving the validation request signal 12 takes place in a step S0 of the sketched method.

In the next step S1, a control command signal 16 for at least one vehicle component 18 of the designated vehicle 10 is transmitted to the designated vehicle 10. The control command signal 16 comprises command data 20 characterizing multiple control commands for a respective vehicle component 18. In this schematic representation in total four different sets of command data 20 are sketched as command data 20a, 20b, 20c, 20d. Command data 20a contains details on a specific movement of a vehicle seat to a specific final seat position, i.e., according to command data 20a this specific movement is realizable by a control unit 22 of the designated vehicle 10. According to command data 20b, a specific voltage is applied on a specific wiring harness of the designated vehicle 10. This specific voltage is applied by activating an air conditioning system 24 of the designated vehicle 10 for a specific time duration of a length of 5 seconds. According to command data 20c, a chassis of the designated vehicle 10 is moved to a position in which a specific ground clearance is given. According to command data 20d, an activation of a light equipment according to a specific light activation pattern is effected, wherein the lightening equipment could be headlights of the designated vehicle 10. Out of all the different command data 20a, 20b, 20c, 20d, command data 20a and command data 20b are chosen to be comprised by the control command signal 16. This means that according to the control command signal 16 a specific movement of a vehicle seat as vehicle component 18 is expected. The expected moving direction 19 of the vehicle seat as vehicle component 18 is sketched with an respective arrow in the only Fig. Additionally due to command data 20b, the control command signal 16 comprises that the air conditioning system 24 of the designated vehicle 10 is switched on for 5 seconds in order to apply a specific voltage on a specific wiring harness within the designated vehicle 10.

The transmitted command signal 16 is then received by a control unit 22 of the designated vehicle 10. It is furthermore possible that several command signals 16 are provided of which a current control command signal 16 is chosen and transmitted to the designated vehicle 10. The current control command signal 16 is chosen in specific time intervals and/or at a specific point in time. This means that for every day or every hour a specific control command signal 16 could be chosen and transmitted to the designated vehicle 10. The control command signal 16 chosen depends on the time where the validation request signal 12 was received by the server unit 14. The control command signal 16 is furthermore encrypted meaning it is sent as an encrypted file to the designated vehicle 10. An encryption of the encrypted file is based on encryption data specific for the designated vehicle 10. This means that only the specific vehicle 10 is able to decrypt the encrypted control command signal 16 to further process the received control command signal 16. Only if the designated vehicle 10 receives the transmitted control command signal 16, it can operate the at least one vehicle component 18 of the designated vehicle 10 according to the transmitted control command signal 16. This operating takes place in step S2.

During the operation step S2, the vehicle seat is moved to the specific final seat position which is sketched with dashed lines. Furthermore, the air conditioning system 24 of the designated vehicle 10 is switched on for 5 seconds and afterwards switched off again, resulting in a specific voltage signal measured by an on-board diagnostics (OBD) system of the designated vehicle 10.

In a next step S3, a request signal 26 is transmitted to the off-vehicle device 28, which is here sketched as off-vehicle device 28a and off-vehicle device 28b. In this case, two different request signals 26 are transmitted, which are indicated as request signal 26a and request signal 26b. The respective off-vehicle device 28 to which the request signal 26a, 26b is transmitted is further referred to as off-vehicle device 28a or off-vehicle device 28b, respectively. Off-vehicle device 28a is the mobile communication device 11 from which the validation request signal 12 was sent to the server unit 14 in step S0. The request signal 26a requests submission of specific measurement data 30 which are a static or moving of the presumed vehicle 33, i.e., of the vehicle that is presumed to be the designated vehicle 10. The request signal 26a furthermore comprises indication data characterizing a time limit 32 for submission of the specific measurement data 30a, i.e., for submission of the moving or static picture of the presumed vehicle 33.

Additionally to request signal 26a request signal 26b is transmitted to the off-vehicle device 28b which is a connector designed to be connected with the OBD system of the presumed vehicle 33. As specific measurement data 30b OBD data is requested that is supposed to be retrieved from the presumed vehicle 33 by connecting the connector to the vehicle diagnostics system of the presumed vehicle 33. As measurement data 30b voltage value data is expected that is supposed to show the temporal increase in voltage due to the short time activation of the air conditioning system 24 of the designated vehicle 10.

In a step S4, the server unit 14 receives the requested specific measurement data 30a, 30b for the presumed vehicle 33. Within the server unit 14 this specific measurement data 30a and 30b is received by an evaluation unit 34. In a step S5 the evaluation unit 34 of the server unit 14 evaluates the received specific measurement data 30a, 30b by applying a specific evaluation rule. This is done to determine if the at least one vehicle component 18 of the presumed vehicle 33 was operated according to the transmitted control command signal 26a, 26b. In scenario A this is the case. This means that the seat position of the seat of the vehicle as specific vehicle component 18 was moved forwards as indicated by the moving direction 19 which can be determined with the help of the taken photograph as specific measurement data 30a. Furthermore, a specific voltage pattern was measured as specific measurement data 30b indicates. This means that the at least one vehicle component 18, which is here the vehicle seat as well as the air conditioning system 24 of the presumed vehicle 33 has been operated according to the control command signal 26a, 26b. This results in step S6 where a validation process is taking place by which it is validated that the presumed vehicle 33 is actually the designated vehicle 10. Therefore a certificate 36 is created that contains data stating that the presumed vehicle 33 is actually the designated vehicle 10.

Alternatively to scenario A, it is possible that scenario B takes place. In scenario B neither the vehicle component 18 as the vehicle seat was moved according to control command signal 16 nor was the air conditioning system 24 switched on for 5 seconds in order to obtain corresponding specific measurement data 30b. This means that the presumed vehicle 33 of which specific measurement data 26a and 26b are available does not show the expected operations which were performed by the designated vehicle 10. As the presumed vehicle 33 was not operated according to the control command signal 16, the validation of the presumed vehicle 33 as the designated vehicle 10 was not successful. Therefore a warning 38 is stored within the server unit 14 indicating that the presumed vehicle 33 is not the designated vehicle 10. In this case the person who sent the validation request signal 12 receives a negative result and therefore now knows that he or she took a photograph of a vehicle that is certainly not the designated vehicle 10.

Additionally or alternatively to the described request signal 26a, 26b, it is also possible to transmit another request signal 26 to a sensor device that is an off-vehicle sensor device. The request signal 26 then comprises control data for the sensor device so the sensor device measures and submits the specific measurement data 30 of the presumed vehicle 33. This sensor could be for example a traffic camera or another stationary measurement device that could provide the specific measurement data 30 if necessary.

By using the OBD system data 30b as specific measurement data 30, it is possible to also validate data generated by the presumed vehicle 33 itself, for example generated by a CAN-bus system of the presumed vehicle 33. The collection of vehicle voltage data and analysis of such data as specific measurement data 30b can then be used to validate that not only the presumed vehicle 33 is the designated vehicle 10 but also that OBD data from the presumed vehicle 33 are actually received from the designated vehicle 10. This information could be stored in the certificate 36. Analogously, the information that the OBD system data from the presumed vehicle 33 are not OBD system data of the designated vehicle 10 can be stored in the warning 38.

In summary, the example shows cross-validation of data extracted from vehicles via subtle perturbations.

## Claims

1. Method for validating an identity of a designated functional device (10), the method comprising:
- transmitting a control command signal (16) for at least one component (18) of the designated functional device (10) to the designated functional device (10) by an off-functional-device server unit (14) (S1), wherein transmission of the control command signal (16) is triggered by a validation request signal (12) received by the off-functional-device server unit (14) from an off-functional-device communication device (11), wherein the off-functional-device server unit (14) creates the control command signal (16) for the at least one component (18) of the designated functional device (10), wherein several control command signals (16) are provided of which a current control command signal (16) is chosen and transmitted to the designated functional device (10), wherein the current control command signal (16) is chosen in specific time intervals and/or at a specific point in time;
- operating the at least one component (18) of the designated functional device (10) according to the transmitted control command signal (16) by a control unit (22) of the designated functional device (10) (S2);
- transmitting a request signal (26) to an off-functional-device device (28) requesting submission of specific measurement data (30) of a functional device that is presumed to be the designated functional device (10) by the off-functional-device server unit (14) (S3);
- receiving the requested specific measurement data (30) for the presumed functional device (33) by the off-functional-device server unit (14) (S4);
- evaluating the received specific measurement data (30) by the off-functional-device server unit (14) by applying a specific evaluation rule to determine if the at least one component (18) of the presumed functional device (33) was operated according to the transmitted control command signal (16) (S5);
- if the at least one component (18) of the presumed functional device (33) was operated according to the transmitted control command signal (16), validating that the presumed functional device (33) is the designated functional device (10) (S6).

2. Method according to claim 1, wherein the request signal (26) is transmitted to a mobile communication device (11), wherein the request signal (26) comprises request data to submit a static or moving picture of the presumed functional device (33) as specific measurement data (30a).

3. Method according to any of the preceding claims, wherein the request signal (26) is transmitted to a sensor device, wherein the request signal (26) comprises control data for the sensor device so that the sensor device measures and submits the specific measurement data (30) of the presumed functional device (33).

4. Method according to any of the preceding claims, wherein the request signal (26b) is transmitted to a connector which is connected with a functional device diagnostics system, wherein the request signal (26b) comprises specification data characterizing functional device diagnostics data to retrieve from the functional device diagnostics system as requested specific measurement data (30b).

5. Method according to any of the preceding claims, wherein the request signal (26) comprises indication data characterizing a time limit (32) for submission of the specific measurement data (30).

6. Method according to any of the preceding claims, wherein the control command signal (16) comprises command data (20) characterizing multiple control commands for respective components (18).

7. Method according to any of the preceding claims, wherein the validation request signal (12) is received from the off-functional-device communication device (11) which is a mobile communication device (11).

8. Method according to any of the preceding claims, wherein according to the control command signal (16) at least one of following operations is executed in the designated functional device (10):
- movement of a functional device seat to a specific final seat position;
- activation of a lighting equipment according to a specific light activation pattern:
- application of a specific voltage on a specific wiring harness;
- movement of a chassis of the functional device to a position in which a specific ground clearance is given.

9. Method according to any of the preceding claims, wherein the control command signal (16) is transmitted as an encrypted file to the designated functional device (10), wherein an encryption of the encrypted file is based on encryption data specific for the designated functional device (10).

10. System comprising a functional device with at least one control unit (22) for operating at least one component (18) of the functional device according to a control command signal (16) and a server unit (14), wherein the system is configured to conduct a method as described in the claims 1 to 9.

## Patentansprüche

1. Verfahren zum Validieren einer Identität einer bestimmten funktionalen Vorrichtung (10), wobei das Verfahren Folgendes umfasst:
- Übertragen eines Steuerbefehlssignals (16) für mindestens eine Komponente (18) der bestimmten funktionalen Vorrichtung (10) an die bestimmte funktionale Vorrichtung (10) durch eine außerhalb der funktionalen Vorrichtung gelegene Servereinheit (14) (S1), wobei Übertragung des Steuerbefehlssignals (16) ausgelöst wird durch ein Validierungsanforderungssignal (12), das von der außerhalb der funktionalen Vorrichtung gelegenen Servereinheit (14) von einer außerhalb der funktionalen Vorrichtung gelegene Kommunikationsvorrichtung (11) empfangen wird, wobei die außerhalb der funktionalen Vorrichtung gelegene Servereinheit (14) das Steuerbefehlssignal (16) für die mindestens eine Komponente (18) der bestimmten funktionalen Vorrichtung (10) erstellt, wobei mehrere Steuerbefehlssignale (16) bereitgestellt werden, von denen ein aktuelles Steuerbefehlssignal (16) ausgewählt und an die bestimmte funktionale Vorrichtung (10) übertragen wird, wobei das aktuelle Steuerbefehlssignal (16) in spezifischen Zeitintervallen und/oder zu einem spezifischen Zeitpunkt ausgewählt wird;
- Betreiben der mindestens einen Komponente (18) der bestimmten funktionalen Vorrichtung (10) gemäß dem übertragenen Steuerbefehlssignal (16) durch eine Steuereinheit (22) der bestimmten funktionalen Vorrichtung (10) (S2);
- Übertragen eines Anforderungssignals (26) an eine außerhalb der funktionalen Vorrichtung gelegene Vorrichtung (28) mit der Anforderung, spezifische Messdaten (30) einer funktionalen Vorrichtung zu unterbreiten, von der durch die außerhalb der funktionalen Vorrichtung gelegene Servereinheit (14) (S3) angenommen wird, dass sie die bestimmte funktionale Vorrichtung (10) ist;
- Empfangen der angeforderten spezifischen Messdaten (30) für die angenommene funktionale Vorrichtung (33) durch die außerhalb der funktionalen Vorrichtung gelegene Servereinheit (14) (S4);
- Beurteilen der durch die außerhalb der funktionalen Vorrichtung gelegene Servereinheit (14) empfangenen spezifischen Messdaten (30) durch Anwenden einer spezifischen Beurteilungsregel, um zu bestimmen, ob die mindestens eine Komponente (18) der angenommenen funktionalen Vorrichtung (33) gemäß dem übertragenen Steuerbefehlssignal (16) (S5) betrieben wurde;
- wenn die mindestens eine Komponente (18) der angenommenen funktionalen Vorrichtung (33) gemäß dem übertragenen Steuerbefehlssignal (16) betrieben wurde, Validieren, dass die angenommene funktionale Vorrichtung (33) die bestimmte funktionale Vorrichtung (10) (S6) ist.

2. Verfahren nach Anspruch 1, wobei das Anforderungssignal (26) an eine mobile Kommunikationsvorrichtung (11) übertragen wird, wobei das Anforderungssignal (26) Daten umfasst, mit denen angefordert wird, ein statisches oder bewegtes Bild der angenommenen funktionalen Vorrichtung (33) als spezifische Messdaten (30a) zu unterbreiten.

3. Verfahren nach einem der vorstehenden Ansprüche, wobei das Anforderungssignal (26) an eine Sensorvorrichtung übertragen wird, wobei das Anforderungssignal (26) Steuerdaten für die Sensorvorrichtung umfasst, so dass die Sensorvorrichtung die spezifischen Messdaten (30) der angenommenen funktionalen Vorrichtung (33) misst und unterbreitet.

4. Verfahren nach einem der vorstehenden Ansprüche, wobei das Anforderungssignal (26b) an einen Konnektor übertragenen wird, der mit einem Diagnosesystem einer funktionalen Vorrichtung verbunden ist, wobei das Anforderungssignal (26b) Spezifikationsdaten umfasst, die Diagnosedaten der funktionalen Vorrichtung charakterisieren, um von dem Diagnosesystem der funktionalen Vorrichtung spezifische Messdaten (30b) gemäß der Anfrage zu empfangen.

5. Verfahren nach einem der vorstehenden Ansprüche, wobei das Anforderungssignal (26) Anzeigedaten umfasst, die ein Zeitlimit (32) für Unterbreiten der spezifischen Messdaten (30) charakterisieren.

6. Verfahren nach einem der vorstehenden Ansprüche, wobei das Steuerbefehlssignal (16) Befehlsdaten (20) umfasst, die mehrere Steuerbefehle für jeweilige Komponenten (18) charakterisieren.

7. Verfahren nach einem der vorstehenden Ansprüche, wobei das Validierungsanforderungssignal (12) von der außerhalb der funktionalen Vorrichtung gelegenen Kommunikationsvorrichtung (11) empfangen wird, die eine mobile Kommunikationsvorrichtung (11) ist.

8. Verfahren nach einem der vorstehenden Ansprüche, wobei gemäß dem Steuerbefehlssignal (16) mindestens eine der nachstehenden Operationen in der bestimmten funktionalen Vorrichtung (10) ausgeführt wird:
- Bewegung eines Sitzes der funktionalen Vorrichtung zu einer spezifischen Sitzendposition;
- Aktivierung einer Beleuchtungsanlage gemäß einem spezifischen Lichtaktivierungsmuster:
- Anwendung einer spezifischen Spannung auf einen spezifischen Kabelbaum;
- Bewegung eines Gehäuses der funktionalen Vorrichtung zu einer Position, in der ein spezifischer Bodenabstand gegeben ist.

9. Verfahren nach einem der vorstehenden Ansprüche, wobei das Steuerbefehlssignal (16) an die bestimmte funktionale Vorrichtung (10) als verschlüsselte Datei übertragen wird, wobei eine Verschlüsselung der verschlüsselten Datei auf Verschlüsselungsdaten basiert, die für die bestimmte funktionale Vorrichtung (10) spezifisch sind.

10. System, das eine funktionale Vorrichtung mit mindestens einer Steuereinheit (22) zum Betreiben von mindestens einer Komponente (18) der funktionalen Vorrichtung gemäß einem Steuerbefehlssignal (16) und eine Servereinheit (14) umfasst, wobei das System konfiguriert ist, um ein Verfahren durchzuführen, wie es in den Ansprüchen 1 bis 9 beschrieben ist.

## Revendications

1. Procédé de validation d'une identité d'un dispositif fonctionnel désigné (10), le procédé comprenant :
- une transmission d'un signal d'instruction de commande (16) pour au moins un élément (18) du dispositif fonctionnel désigné (10) au dispositif fonctionnel désigné (10) par une unité serveur hors dispositif fonctionnel (14) (S1), dans lequel la transmission du signal d'instruction de commande (16) est déclenchée par un signal de demande de validation (12) reçu par l'unité serveur hors dispositif fonctionnel (14) à partir d'un dispositif de communication hors dispositif fonctionnel (11), dans lequel l'unité serveur hors dispositif fonctionnel (14) crée le signal d'instruction de commande (16) pour le au moins un élément (18) du dispositif fonctionnel désigné (10), dans lequel plusieurs signaux d'instruction de commande (16) sont fournis parmi lesquels un signal d'instruction de commande de courant (16) est choisi et transmis au dispositif fonctionnel désigné (10), dans lequel le signal d'instruction de commande de courant (16) est choisi dans des intervalles de temps spécifiques et/ou à un moment spécifique ;
- un actionnement du au moins un élément (18) du dispositif fonctionnel désigné (10) conformément au signal d'instruction de commande transmis (16) par une unité de commande (22) du dispositif fonctionnel désigné (10) (S2) ;
- une transmission d'un signal de demande (26) à un dispositif hors dispositif fonctionnel (28) demandant une soumission de données de mesure spécifiques (30) d'un dispositif fonctionnel qui est supposé être le dispositif fonctionnel désigné (10) par l'unité serveur hors dispositif fonctionnel (14) (S3) ;
- une réception des données de mesure spécifiques demandées (30) pour le dispositif fonctionnel supposé (33) par l'unité serveur hors dispositif fonctionnel (14) (S4) ;
- une évaluation des données de mesure spécifiques reçues (30) par l'unité serveur hors dispositif fonctionnel (14) en appliquant une règle d'évaluation spécifique pour déterminer si le au moins un élément (18) du dispositif fonctionnel supposé (33) a été actionné conformément au signal d'instruction de commande transmis (16) (S5) ;
- si le au moins un élément (18) du dispositif fonctionnel supposé (33) a été actionné conformément au signal d'instruction de commande transmis (16), le fait de valider que le dispositif fonctionnel supposé (33) est le dispositif fonctionnel désigné (10) (S6).

2. Procédé selon la revendication 1, dans lequel le signal de demande (26) est transmis à un dispositif de communication mobile (11), dans lequel le signal de demande (26) comprend des données de demande pour soumettre une image fixe ou animée du dispositif fonctionnel supposé (33) en tant que données de mesure spécifiques (30a).

3. Procédé selon l'une quelconque des revendications précédentes, dans lequel le signal de demande (26) est transmis à un dispositif capteur, dans lequel le signal de demande (26) comprend des données de commande pour le dispositif capteur de sorte que le dispositif capteur mesure et soumette les données de mesure spécifiques (30) du dispositif fonctionnel supposé (33).

4. Procédé selon l'une quelconque des revendications précédentes, dans lequel le signal de demande (26b) est transmis à un connecteur qui est connecté à un système de diagnostic de dispositif fonctionnel, dans lequel le signal de demande (26b) comprend des données de spécification caractérisant des données de diagnostic de dispositif fonctionnel à récupérer à partir du système de diagnostic de dispositif fonctionnel en tant que données de mesure spécifiques demandées (30b).

5. Procédé selon l'une quelconque des revendications précédentes, dans lequel le signal de demande (26) comprend des données d'indication caractérisant une limite de temps (32) pour la soumission des données de mesure spécifiques (30).

6. Procédé selon l'une quelconque des revendications précédentes, dans lequel le signal d'instruction de commande (16) comprend des données d'instructions (20) caractérisant de multiples instructions de commande pour des éléments (18) respectifs.

7. Procédé selon l'une quelconque des revendications précédentes, dans lequel le signal de demande de validation (12) est reçu à partir du dispositif de communication hors dispositif fonctionnel (11) qui est un dispositif de communication mobile (11).

8. Procédé selon l'une quelconque des revendications précédentes, dans lequel conformément au signal d'instruction de commande (16) au moins une des opérations suivantes est exécutée dans le dispositif fonctionnel désigné (10) :
- un déplacement d'un siège de dispositif fonctionnel jusqu'à une position de siège finale spécifique ;
- une activation d'un équipement d'éclairage conformément à un mode d'activation de lumière spécifique ;
- une application d'une tension spécifique sur un faisceau de fils spécifique ;
- un déplacement d'un châssis du dispositif fonctionnel jusqu'à une position dans laquelle une garde au sol spécifique est donnée.

9. Procédé selon l'une quelconque des revendications précédentes, dans lequel le signal d'instruction de commande (16) est transmis en tant que fichier chiffré au dispositif fonctionnel désigné (10), dans lequel un chiffrement du fichier chiffré est basé sur des données de chiffrement spécifiques pour le dispositif fonctionnel désigné (10).

10. Système comprenant un dispositif fonctionnel avec au moins une unité de commande (22) pour actionner au moins un élément (18) du dispositif fonctionnel conformément à un signal d'instruction de commande (16) et une unité serveur (14), dans lequel le système est configuré pour effectuer un procédé selon les revendications 1 à 9.
